# FASCICULE DE BREVET EUROPEEN

(11) **EP 2 501 217 B1**
(45) Date de publication et mention de la délivrance du brevet: **26.08.2015**
(21) Numéro de dépôt: 10788031.2
(22) Date de dépôt: 17.11.2010
(51) Int. Cl.: A01G 9/12

(54) **PAROI VEGETALE ET PROCEDE ASSOCIE POUR FAVORISER L'ANCRAGE DES VEGETAUX**
GRÜNE WAND UND ZUGEHÖRIGE VERFAHREN ZUR FÖRDERUNG DER VERWACHSUNG VON PFLANZEN
GREEN WALL AND RELATED METHOD FOR ENCOURAGING THE ANCHORING OF PLANTS

(30) Priorité: 18.11.2009 BE 200900717
(43) Date de publication de la demande: 26.09.2012
(73) Titulaire: AGC Glass Europe, 1348 Louvain-la-Neuve (BE)
(72) Inventeur: BOULANGER, Pierre, B-6040 Jumet (BE); LIEFFRIG, Vincent, B-6040 Jumet (BE)
(74) Mandataire: Chabou, Samia
(86) Numéro de dépôt international: PCT/EP2010/067634
(87) Numéro de publication internationale: WO 2011/061209

(56) Documents cités:
- WO-A1-2009/084310
- FR-A1- 2 747 265
- JP-A- 2007 306 862
- JP-A- 2008 011 775

## Description

### 1. Domaine de l'invention

La présente invention se rapporte à des parois recouvertes de sujets végétaux grimpants.

### 2. Solutions de l'art antérieur

On connaît les murs végétaux utilisés pour l'aménagement paysager d'ouvrages de génie civil et de bâtiments (FR 2 747 265 A1). Ces murs végétaux apportent des solutions aux problèmes d'isolation thermique et acoustique rencontrés dans les zones urbanisées. Les murs végétaux connus permettent l'enracinement de plantes sur des nappes imputrescibles disposées en altitude sur une paroi verticale et pourvues d'un système d'arrosage automatique. La présence d'organismes photosynthétiques contribue à capter le CO₂ atmosphérique.

On connaît aussi depuis longtemps des structures ajourées légères en treillis, lattis et voire même simplement de tuteurs sur lesquels il est relativement aisé de faire grimper certaines plantes enracinées à la base des structures de manière à former des parois végétales plus ou moins denses.

Ces structures connues ne sont toutefois pas à l'abri d'inconvénients tels que le coût élevé de la structure complexe et de l'arrosage des murs végétaux selon FR 2 747 265 A1 et de la fragilité des murs des structures ajourées, inaptes à couvrir des murs entiers de bâtiments ou de fournir une isolation efficace.

Un autre exemple de mur végétalisé est décrit dans JP 2008 011775 A.

### 3. Objectifs de l'invention

L'invention s'adresse dès lors à des parois végétales exemptes des inconvénients des systèmes connus et capables de recouvrir la totalité des surfaces d'un bâtiment ou d'un ouvrage de génie civil en assurant une bonne isolation. L'invention vise également à fournir de telles parois végétales qui sont robustes et résistantes aux intempéries tout en gardant un coût limité en fournissant dans le même temps un résultat d'isolation substantiel.

### Exposé de l'invention

A cet effet, l'invention concerne une paroi végétale comprenant un support solide présentant une surface recouverte d'une multiplicité de sujets végétaux grimpants vivants enracinés dans le sol à proximité immédiate de la paroi et accrochés sur la surface du support selon lequel le support est sélectionné parmi les objets en verre

Les sujets végétaux convenant à la paroi végétale selon l'invention appartiennent à la catégorie des plantes grimpantes, c'est-à-dire à tout type de végétal capable de s'élever verticalement en s'appuyant, en s'accrochant ou en s'enroulant sur ou autour d'un support. Plus particulièrement ici, les plantes grimpantes convenant au mur selon l'invention sont des végétaux capables de s'élever verticalement en s'accrochant sur la surface du support solide en verre. Dans cette catégorie, on trouve les organismes vivants du règne végétal cormophyte (végétaux supérieurs à tiges), et principalement les plantes à fleurs (*angiospermae*) de divers ordres dans la classification phylogénétique, tels que les ordres des rosales (*rosales*), des apiales (*araliades*), des vitales (*virales*) et en particulier la famille des moracées, genre des ficus pour l'ordre des rosales, la famille des araliacées, genre des lierres (*hedenae*) pour les apiales, et la famille des vitacées, genre des parthenocissus, ampélopsis et cissus, communément appelées « vignes vierges », pour les vitales. Parmi les ficus et les lierres, les catégories grimpantes telles que *Ficus pumila* (ficus grimpant) et *Hedera helix* (lierre grimpant ou lierre commun) ont donné de bons résultats.

Selon l'invention, les sujets végétaux sont enracinés dans le sol à proximité immédiate de la paroi, c'est-à-dire à une distance suffisamment proche de celle-ci pour que le sujet végétal puisse entrer en contact avec lui dès qu'il croît à plus de quelques centimètres au-dessus du sol. Cette distance ne dépasse généralement pas 30 cm et, de préférence, pas 20 cm.

De préférence, le verre de l'objet formant support est choisi parmi les verres texturés et les verres revêtus d'au moins une couche comprenant au moins un métal ou un oxyde métallique. Par verre texturé, on entend les verres sablés, les verres coulés et les verres imprimés dont l'état de surface présente des irrégularités formant un motif répétitif ou aléatoire. Quant aux verres revêtus d'au moins une couche, ils sont enduits d'une seule couche mince ou, en variante, d'un empilage de couches minces transparentes à la lumière visible constituées d'un ou plusieurs métaux ou oxydes métalliques. Des verres texturés revêtus d'au moins une couche comprenant au moins un métal ou un oxyde métallique font aussi partie des verres conformes à la paroi végétale selon l'invention. Tous les verres cités ci-dessus peuvent également comporter, sur au moins une partie de leur face opposée, un revêtement opaque ou translucide tel que émaux, peinture, ...

L'objet en verre utilisé comme support du mur végétal conforme à l'invention peut présenter des surfaces externes de forme quelconque. Généralement, cependant, on utilise comme support des feuilles de verre plat, en raison de leur adéquation à constituer une paroi. Ces feuilles sont le plus souvent planes ou parfois légèrement incurvées dans une ou même deux directions. Les feuilles de verre sont généralement disposées verticalement ou selon un angle qui ne dépasse pas 50 degrés d'angle par rapport à la direction verticale. Pour des façades ou des toits, cet angle peut dépasser les 50 degrés et aller jusqu'à 100 degrés, de préférence inférieur à 90 et de manière la plus préférée inférieure à 80 pour une meilleure captation des rayons solaires directs.

De manière surprenante, on a constaté que le phénomène d'accrochage des sujets végétaux était meilleur lorsque le taux de transmission lumineuse du verre était faible. On préfère que ce taux ne dépasse pas 65%, mesuré au travers d'une épaisseur de feuille de 4mm avec une source de type lumière du jour normalisée D65 par la CIE (Commission Internationale de l'Eclairage) sous un angle solide d'observation de 2°. De manière particulièrement préférée, on utilise un verre pour lequel ce taux de transmission lumineuse, mesuré dans les mêmes conditions que celles données plus haut, ne dépasse pas 55%. De manière la plus préférée, on choisit un verre dont le taux de transmission lumineuse ne dépasse pas 40%.

La couche métallique qui peut recouvrir le support en verre selon une variante de l'invention peut être une couche de métal ou d'alliage de métaux, en particulier les alliages métalliques inoxydables tels que les alliages à base de fer, nickel et chrome.

Lorsque le verre utilisé pour la paroi végétale conforme à l'invention est un verre revêtu d'au moins une couche d'oxyde métallique, le métal de l'oxyde est de préférence un élément appartenant à l'une des colonnes 4, 6, 8, 9 et 14 du tableau périodique des éléments. En particulier, on préfère que l'oxyde métallique soit choisi parmi les oxydes de Fe, Ru, Os, Co, Rh, Ir, Cr, Mo, W, Ti, Zr, Hf, C, Si, Ge, Sn et Pb.

Selon une variante de la paroi végétale conforme à l'invention, la couche d'oxyde métallique est une couche dure pyrolytique. Une telle couche peut être obtenue par une technique de pulvérisation ou de dépôt chimique en phase vapeur (CVD) d'un ou plusieurs oxydes métalliques sur un ruban de verre chaud en cours de fabrication, ou encore sur la surface du verre en fusion dans le caisson de flottaison de ce verre au sommet d'un bain d'étain fondu (procédé dit "float").

Selon un mode de réalisation de la paroi végétale conforme à l'invention, le revêtement de la feuille de verre peut n'être constitué que d'une couche unique d'oxyde métallique. Une telle couche unique comprend, par exemple, les oxydes de Fe, de Co et de Cr. En variante, la couche unique peut comprendre un oxyde de Ti.

Selon un autre mode de réalisation de la paroi végétale, le revêtement de la feuille de verre peut aussi être constitué d'au moins deux couches d'oxydes métalliques. Dans ce cas, un revêtement ayant donné de bons résultats est constitué de deux couches superposées, la première étant une sous-couche d'oxyde de Si ou d'un oxycarbure de Si et la deuxième une couche d'oxyde de Sn. De préférence, dans la deuxième couche, l'oxyde de Sn est dopé au moyen d'atomes de F ou de Sb.

L'invention concerne aussi un procédé pour favoriser l'ancrage de noeuds de plantes grimpantes sur une paroi sensiblement verticale, selon laquelle on aligne les plantes de manière à enfouir leurs racines dans un sol à proximité immédiate de la base d'une paroi présentant une surface de verre texturé ou de verre revêtu d'au moins une couche conforme à celui de la paroi végétale selon l'invention et que l'on procède à un apport d'eau et d'éléments nutritifs aux racines et/ou aux feuilles des plantes, ainsi qu'à un éclairement par une lumière visible suffisant pour permettre leur croissance par photosynthèse.

Dans ce procédé, les termes ont les mêmes définitions que celles des termes identiques définis plus haut pour la paroi végétale conforme à l'invention.

L'invention va maintenant être décrite au moyen des exemples qui suivent et qui n'ont d'autre but que de mieux illustrer cette invention, sans chercher à en limiter sa portée.

### 5. Figure

D'autres caractéristiques et avantages de l'invention apparaîtront plus clairement à la lecture de la description suivante d'un mode de réalisation préférentiel, donné à titre de simple exemple illustratif et non limitatif, et une figure annexée, présentant une courbe illustrant la corrélation entre le nombre de noeuds avec sécrétion et la transmission lumineuse.

### 6. Description d'au moins un mode de réalisation de l'invention

Des essais d'accrochage de plante grimpante sur différents panneaux de verre plat et plan de 21 cm x 29,5 cm (format A4) ont été réalisés.

Pour ce faire, des plants de *Ficus pumila* (L.) provenant d'un pépiniériste du commerce ont été placés en salle climatisée dans les conditions suivantes :
- Température de jour : 20 °C ;
- Température de nuit : 18°C;
- Hygrométrie relative : 70 % ;
- Eclairage par tubes fluorescents sous une intensité de 110 µmol.m⁻².s⁻¹;
- Durée d'éclairage : 16 h/jour ;
- Substrat : terreau horticole ;
- Conteneur individuel de plant : pot de 10cm de diamètre

Pendant 10 jours de cycle d'éclairement jour/nuit, on a apporté un arrosage régulier à chaque plant. Ensuite des panneaux de verre de dimension A4 rincés à l'eau distillée ont été placés sur des cadres en métal, un panneau en face de chaque plant préalablement taillé de manière à ne laisser subsister que 3 tiges par pot et par panneau. Les tiges ont été fixées au panneau de verre au moyen de papier collant transparent mat à hauteur du point d'attache des deux feuilles situées à l'extrémité supérieure de la tige sous le bourgeon.

On a laissé croître les plants soumis au cycle d'éclairement jour/nuit et à un arrosage régulier du substrat de terreau pendant une période de 35 jours.

L'accrochage des plants de *Ficus pumila* (L.) a été examiné au terme de l'essai de croissance par mesure ou évaluation d'un certain nombre de propriétés :
- tropisme des plants (évaluation quantative) ;
- comptage des noeuds avec sécrétion ;
- comptage des noeuds avec sécrétion par tige ;
- comptage de noeuds ancrés par tige ;
- surface de sécrétion ;
- force d'adhésion

Les différents types de panneaux de verre employés ont été les suivants :
- verre texturé imprimé non coloré ;
- verre texturé
- verre enduit d'une couche dure comprenant des oxydes de Fe, de Co et de Cr ;
- verre enduit d'une couche dure comprenant de l'oxyde de titane ;
- verre enduit d'une couche dure comprenant de l'oxyde d'étain dopé par du fluor ;
- verre à surface modifiée chimiquement par incorporation d'oxyde d'aluminium, de cuivre, de zinc, d'étain, d'argent ;
- verre texturé enduit d'une couche métallique d'alliage inoxydable à base de fer, nickel et chrome métalliques

### 1. Tropisme des plants

On a remarqué qualitativement que certains plants sont attirés par la surface du panneau de verre : même après que les tiges se sont quelque peu éloignées du panneau, on a observé que les tiges se recourbent et croissent en retournant vers la surface de verre où elles s'accrochent.

De manière inattendue, ce sont les panneaux qui présentent une transmission lumineuse (source D65, angle d'observation 2°) sous 4 mm d'épaisseur de verre inférieure à 64 % qui donnent lieu au phénomène de tropisme des tiges. Dans ce cas, les tiges une fois accrochées sur le panneau de verre, ne s'écartent plus de celui-ci lors de leur croissance ultérieure.

### 2. Nombre de noeuds avec sécrétion

On a repéré et compté, pour chaque tige et chaque type de support en verre, le nombre de noeuds qui étaient en contact avec la surface du verre et qui avaient sécrété de la résine d'accrochage, qu'ils soient ancrés ou non à la surface du panneau de verre.

Les moyennes obtenues pour les panneaux constitués d'un même type de verre ont donné les résultats consignés dans le Tableau 1 qui suit.
**Tableau 1 Noeuds ayant donné lieu à sécrétion**

**Tableau 1**

| | oe | Nb. total de | | | | , | oe | oe |
|---|---|---|---|---|---|---|---|---|
| | | Tiges observes | Tiges avec ancrage | Noeuds ancrs | | | | |
| Op1 | 10,1 | 9 | 3 | 3 | 121 | 0,025 | 10,1 | 10,4 |
| Op2 | 8,6 | 9 | 1 | 1 | 106 | 0,009 | 4,6 | 2,4 |
| Op3 | 7,0 | 9 | 2 | 2 | 100 | 0,020 | 6,6 | 61,3 |
| Op4 | 6,4 | 9 | 1 | 1 | 134 | 0,007 | 7,6 | 1,1 |
| Op5 | 6,1 | 9 | 1 | 1 | 81 | 0,012 | 1,0 | 5,3 |
| Op6 | 4,8 | 9 | 1 | 1 | 114 | 0,009 | 5,1 | 76,6 |
| Ch1 | 10,4 | 9 | 1 | 1 | 130 | 0,008 | 3,2 | 1,6 |
| Ch2 | 4,4 | 9 | 1 | 1 | 117 | 0,009 | 6,7 | 8,7 |
| Ch3 | 3,6 | 9 | 1 | 1 | 119 | 0,008 | 7,9 | 41,5 |
| Ch4 | 3,5 | 4 | 1 | 1 | 142 | 0,007 | 178,9 | 8,6 |
| Ch5 | 2,8 | 9 | 1 | 1 | 66 | 0,015 | 14,7 | 7,8 |
| Ch6 | 2,7 | 6 | 2 | 2 | 114 | 0,018 | 35,1 | 9,3 |

Les verres utilisés pour les panneaux de support ont été classés en 2 groupes, à savoir.

### a. groupe « optique »

- Op1 : verre d'aspect gris acier enduit d'une couche dure comprenant des oxydes de fer, de chrome et de cobalt et teinté en gris dans sa masse ;
- Op2 : verre d'aspect gris argenté avec une couche dure comprenant de l'oxyde de titane ;
- Op3 : verre d'aspect vert métallisé coloré en vert dans sa masse et recouvert de la même couche dure que le verre Op1 ;
- Op4 : verre d'aspect métallisé clair non coloré dans sa massé et recouvert de la même couche dure que le verre Op1 ;
- Op5 : verre d'aspect gris coloré dans sa masse dépourvu de couche ;
- Op6 : verre d'aspect argenté brillant non coloré dans sa masse et recouvert de la même couche dure que le verre Op2

### b. groupe « chimique

- Ch1 : verre texturé imprimé d'un motif « galette », d'aspect métallisé, non coloré dans sa masse et recouvert d'une couche d'acier inoxydable Fe-Ni-Cr de 30 nm d'épaisseur ;
- Ch2: verre d'aspect gris acier non coloré texturé imprimé d'un motif identique au verre Ch1 et recouvert d'une couche dure comprenant du TiO₂ ;
- Ch3 : verre clair non enduit ;
- Ch4 : verre texturé imprimé d'un motif « galette », dépourvu de couche et ayant subi un traitement de matage par sablage ;
- Ch5 : verre dont la surface a été modifiée par diffusion d'ions Cu⁺ ;
- Ch6 : verre texturé chimiquement au moyen d'une solution saline à base d'acide fluorhydrique sur une de ses faces.

On a aussi mesuré le taux de transmission lumineuse TL des panneaux utilisés (source D65, angle d'observation 2° sous 4 mm d'épaisseur de verre). Les résultats sont les suivants :

| **Type de verre** | **TL, %** |
|---|---|
| Op1 | 20,7 |
| Op2 | 34,6 |
| Op3 | 31,9 |
| Op4 | 37,9 |
| Op5 | 49,1 |
| Op6 | 63,4 |
| Ch3 | 81,5 |
| Ch5 | 89,2 |

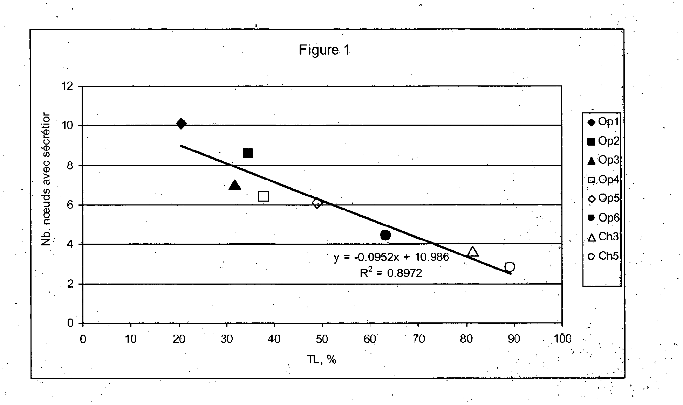

On observe, sur la figure, que le nombre de noeuds avec sécrétion par tige est relativement bien inversement corrélé avec le taux de transmission lumineuse du panneau de verre support : plus ce taux est élevé, moins il y a de noeuds avec sécrétion.

## Revendications

1. Paroi végétale comprenant un support solide présentant une surface recouverte d'une multiplicité de sujets végétaux grimpants vivants enracinés dans le sol à proximité immédiate de la paroi et accrochés sur la surface du support, **caractérisée en ce que** le support est sélectionné parmi les objets en verre.

2. Paroi végétale selon la revendication précédente, **caractérisée en ce que** les sujets végétaux sont choisis parmi les plantes grimpantes appartenant aux genres des ficus, à celui des lierres et à celui des vignes vierges dans la classification phylogénétique.

3. Paroi végétale selon la revendication 1 ou 2, **caractérisée en ce que** le verre de l'objet formant le support est choisi parmi les verres texturés, les verres revêtus d'au moins une couche comprenant au moins un métal ou un oxyde métallique, et les verres à la fois texturés et revêtus d'au moins une couche comprenant au moins un métal ou un oxyde métallique.

4. Paroi végétale selon une quelconque des revendications précédentes, **caractérisée en ce que** l'objet en verre est une feuille de verre plat dont le taux de transmission lumineuse TL est au plus de 65%, mesuré au travers d'une épaisseur de feuille de 4 mm avec une source de type lumière du jour normalisée D65 par la CIE sous un angle solide d'observation de 2°.

5. Paroi végétale selon une quelconque des revendications précédentes, **caractérisée en ce que** l'objet en verre est une feuille de verre plat inclinée par rapport à la direction verticale d'un angle qui ne dépasse pas 50 degrés d'angle.

6. Paroi végétale selon une quelconque des revendications précédentes, **caractérisée en ce que** l'objet est un objet en verre revêtu d'au moins une couche comprenant un oxyde métallique choisi parmi au moins un oxyde d'un élément appartenant à l'une des colonnes 4, 6, 8, 9 et 14 du tableau périodique des éléments.

7. Paroi végétale selon la revendication précédente, **caractérisée en ce que** l'oxyde métallique est choisi parmi au moins un des oxydes de Fe, Ru, Os, Co, Rh, Ir, Cr, Mo, W, Ti, Zr, Hf, C, Si, Ge, Sn et Pb.

8. Paroi végétale selon une quelconque des revendications 3, 6 et 7, **caractérisée en ce que** la couche d'oxyde métallique du revêtement est une couche dure pyrolytique.

9. Paroi végétale selon une quelconque des revendications 3, 6 à 8, **caractérisée en ce que** le revêtement est constitué d'une seule couche de métal, d'alliage métallique ou d'oxyde métallique.

10. Paroi végétale selon la revendication précédente, **caractérisée en ce que** la couche de revêtement comprend les oxydes de Fe, de Co et de Cr.

11. Paroi végétale selon la revendication 8, **caractérisée en ce que** la couche de revêtement comprend un oxyde de Ti.

12. Paroi végétale selon une quelconque des revendications 3 à 7, **caractérisée en ce que** le revêtement est constitué d'au moins deux couches d'oxydes métalliques ou de deux couches métalliques.

13. Paroi végétale selon la revendication précédente, **caractérisée en ce que** le revêtement est constitué de deux couches superposées, la première étant une sous-couche d'un oxycarbure de Si et la deuxième une couche d'oxyde de Sn dopé avec du fluor ou de l'antimoine.

14. Procédé pour favoriser l'ancrage de noeuds de plantes végétales grimpantes sur une paroi sensiblement verticale, **caractérisé en ce que** l'on aligne les plantes de manière à enfouir leurs racines dans un sol à proximité immédiate de la base d'une paroi présentant une surface de verre texturé conforme à celui de la paroi végétale d'une quelconque des revendications 3 à 13 et que l'on procède à un apport d'eau et d'éléments nutritifs aux racines et/ou aux feuilles des plantes, ainsi qu'à un éclairement par une lumière visible suffisant pour permettre leur croissance par photosynthèse.

15. Procédé pour favoriser l'ancrage de noeuds de plantes végétales grimpantes sur une paroi sensiblement verticale, **caractérisé en ce que** l'on aligne les plantes de manière à enfouir leurs racines dans un sol à proximité immédiate de la base d'une paroi présentant une surface de verre revêtue d'au moins une couche conforme à celui de la paroi végétale d'une quelconque des revendications 3 à 13 et que l'on procède à un apport d'eau et d'éléments nutritifs aux racines et/ou aux feuilles des plantes, ainsi qu'à un éclairement suffisant pour permettre leur croissance par photosynthèse.

## Patentansprüche

1. Grüne Wand, umfassend einen festen Träger, der eine Oberfläche aufweist, die mit einer Vielzahl einzelner lebender Kletterpflanzen bedeckt ist, die im Boden in unmittelbarer Nähe der Wand verwurzelt sind und an der Oberfläche des Trägers festgehalten werden, **dadurch gekennzeichnet, dass** der Träger aus Glasgegenständen ausgewählt ist.

2. Grüne Wand nach dem vorhergehenden Anspruch, **dadurch gekennzeichnet, dass** die einzelnen Pflanzen aus Kletterpflanzen ausgewählt sind, die gemäß der phylogenetischen Klassifikation zu den Gattungen Feige (Ficus), Efeu und wilder Wein gehören.

3. Grüne Wand nach Anspruch 1 oder 2, **dadurch gekennzeichnet, dass** das Glas des Gegenstands, der den Träger bildet, ausgewählt ist aus strukturiertem Glas, Glas, das mit mindestens einer Schicht überzogen ist, die mindestens ein Metall oder ein Metalloxid umfasst, und Glas, das gleichzeitig strukturiert und mit mindestens einer Schicht überzogen ist, die mindestens ein Metall oder ein Metalloxid umfasst.

4. Grüne Wand nach einem der vorhergehenden Ansprüche, **dadurch gekennzeichnet, dass** der Gegenstand aus Glas eine Flachglasplatte ist, deren Lichtdurchlässigkeitsgrad TL bei höchstens 65 % liegt, gemessen durch eine Plattendicke von 4 mm mit einer von der CIE standardisierten D65-Tageslichtquelle unter einem Beobachtungsraumwinkel von 2°.

5. Grüne Wand nach einem der vorhergehenden Ansprüche, **dadurch gekennzeichnet, dass** der Glasgegenstand eine Flachglasplatte ist, die in Bezug auf die vertikale Richtung in einem Winkel geneigt ist, der 50 Winkelgrad nicht übersteigt.

6. Grüne Wand nach einem der vorhergehenden Ansprüche, **dadurch gekennzeichnet, dass** der Gegenstand ein Glasgegenstand ist, der mit mindestens einer Schicht beschichtet ist, die ein Metalloxid umfasst, das aus mindestens einem Oxid eines Elements ausgewählt ist, das zu einer der Spalten 4, 6, 8, 9 und 14 des Periodensystems der Elemente gehört.

7. Grüne Wand nach dem vorhergehenden Anspruch, **dadurch gekennzeichnet, dass** das Metalloxid aus mindestens einem der Oxide von Fe, Ru, Os, Co, Rh, Ir, Cr, Mo, W, Ti, Zr, Hf, C, Si, Ge, Sn und Pb ausgewählt ist.

8. Grüne Wand nach einem der Ansprüche 3, 6 und 7, **dadurch gekennzeichnet, dass** die Metalloxidschicht der Beschichtung eine harte pyrolytische Schicht ist.

9. Grüne Wand nach einem der Ansprüche 3, 6 und 8, **dadurch gekennzeichnet, dass** die Beschichtung aus einer einzigen Metall-, Metalllegierungs- oder Metalloxidschicht besteht.

10. Grüne Wand nach dem vorhergehenden Anspruch, **dadurch gekennzeichnet, dass** die Beschichtungsschicht die Oxide von Fe, Co und Cr umfasst.

11. Grüne Wand nach Anspruch 8, **dadurch gekennzeichnet, dass** die Beschichtungsschicht ein Ti-Oxid umfasst.

12. Grüne Wand nach einem der Ansprüche 3 bis 7, **dadurch gekennzeichnet, dass** die Beschichtung aus mindestens zwei Metalloxidschichten oder aus zwei Metallschichten besteht.

13. Grüne Wand nach dem vorhergehenden Anspruch, **dadurch gekennzeichnet, dass** die Beschichtung aus zwei übereinanderliegenden Schichten besteht, wobei die erste eine Unterschicht aus einem Si-Oxicarbid ist und die zweite eine Sn-Oxidschicht ist, die mit Fluor oder Antimon dotiert ist.

14. Verfahren zur Förderung der Verwachsung von Verzweigungen von Kletterpflanzen auf einer im Wesentlichen vertikalen Wand, **dadurch gekennzeichnet, dass** die Pflanzen derart ausgerichtet werden, dass ihre Wurzeln in einem Boden in unmittelbarer Nähe des Fundaments einer Wand vergraben werden, die eine strukturierte Glasoberfläche gemäß derjenigen der grünen Wand nach einem der Ansprüche 3 bis 13 aufweist, und dass eine Zufuhr von Wasser und Nährstoffen für die Wurzeln und/oder Blätter der Pflanzen sowie eine Beleuchtung durch ein sichtbares Licht, die ausreicht, um ihr Wachstum durch Photosynthese zu ermöglichen, erfolgt.

15. Verfahren zur Förderung der Verwachsung von Verzweigungen von Kletterpflanzen auf einer im Wesentlichen vertikalen Wand, **dadurch gekennzeichnet, dass** die Pflanzen derart ausgerichtet werden, dass ihre Wurzeln in einem Boden in unmittelbarer Nähe des Fundaments einer Wand vergraben werden, die eine Glasoberfläche, die mit mindestens einer Schicht gemäß derjenigen der grünen Wand nach einem der Ansprüche 3 bis 13 überzogen ist, aufweist und dass eine Zufuhr von Wasser und Nährstoffen für die Wurzeln und/oder Blätter der Pflanzen sowie eine Beleuchtung, die ausreicht, um ihr Wachstum durch Photosynthese zu ermöglichen, erfolgt.

## Claims

1. Green wall comprising a solid support which has a surface covered with a plurality of living climbing plant subjects rooted in the soil immediately next to the wall and attached to the surface of the support, **characterized in that** the support is selected from glass objects.

2. Green wall according to the preceding claim, **characterized in that** the plant subjects are chosen from climbing plants belonging to the Ficus genera, to that of the ivies and to that of the virgin vines in the phylogenetic classification.

3. Green wall according to Claim 1 or 2, **characterized in that** the glass of the object forming the support is chosen from textured glasses, glasses coated with at least one coat comprising at least one metal or one metal oxide, and glasses which are both textured and coated with at least one coat comprising at least one metal or one metal oxide.

4. Green wall according to any one of the preceding claims, **characterized in that** the glass object is a flat glass sheet of which the luminous transmittance LT level is at most 65%, measured through a sheet thickness of 4 mm with a daylight-type source standardized as D65 by the CIE at a solid angle of observation of 2°.

5. Green wall according to any one of the preceding claims, **characterized in that** the glass object is a flat glass sheet inclined relative to the vertical direction by an angle which does not exceed 50 degrees of angle.

6. Green wall according to any one of the preceding claims, **characterized in that** the object is a glass object coated with at least one coat comprising a metal oxide chosen from at least one oxide of an element belonging to one of columns 4, 6, 8, 9 and 14 of the periodic table of elements.

7. Green wall according to the preceding claim, **characterized in that** the metal oxide is chosen from at least one of the Fe, Ru, Os, Co, Rh, Ir, Cr, Mo, W, Ti, Zr, Hf, C, Si, Ge, Sn and Pb oxides.

8. Green wall according to any one of Claims 3, 6 and 7, **characterized in that** the coat of metal oxide of the coating is a hard pyrolytic coat.

9. Green wall according to any one of Claims 3, 6 to 8, **characterized in that** the coating consists of a single coat of metal, of metal alloy or of metal oxide.

10. Green wall according to the preceding claim, **characterized in that** the coat of coating comprises the Fe, Co and Cr oxides.

11. Green wall according to Claim 8, **characterized in that** the coat of coating comprises a Ti oxide.

12. Green wall according to any one of Claims 3 to 7, **characterized in that** the coating consists of at least two coats of metal oxides or of two metallic coats.

13. Green wall according to the preceding claim, **characterized in that** the coating consists of two superimposed coats, the first being an undercoat of a Si oxycarbide and the second a coat of Sn oxide doped with fluorine or antimony.

14. Method for encouraging nodes of climbing plants to anchor to a substantially vertical wall, **characterized in that** the plants are aligned so as to bury their roots in a soil immediately next to the base of a wall which has a textured glass surface in accordance with that of the green wall of any one of Claims 3 to 13, and **in that** the roots and/or the leaves of the plants are provided with water and nutritive elements, and also lighting is provided by means of a visible light sufficient to allow the growth of said plants via photosynthesis.

15. Method for encouraging nodes of climbing plants to anchor to a substantially vertical wall, **characterized in that** the plants are aligned so as to bury their roots in a soil immediately next to the base of a wall which has a glass surface coated with at least one coat in accordance with that of the green wall of any one of Claims 3 to 13, and **in that** the roots and/or the leaves of the plants are provided with water and nutritive elements, and also lighting is provided that is sufficient to allow the growth of said plants via photosynthesis.
